# EUROPEAN PATENT SPECIFICATION

(11) **EP 0 623 100 B1**
(45) Date of publication and mention of the grant of the patent: **14.04.1999**
(21) Application number: 93903394.0
(22) Date of filing: 31.12.1992
(51) Int. Cl.: C07C 1/00

(54) **SOLVENT EXTRACTION OF OIL FROM OIL BEARING MATERIALS**
LÖSUNGSMITTELEXTRAKTION VON ÖL AUS ÖL ENTHALTENDEN MATERIALIEN
EXTRACTION PAR SOLVENT DE L'HUILE CONTENUE DANS DES MATERIAUX

(30) Priority: 31.12.1991 US 815700
(43) Date of publication of application: 09.11.1994
(73) Proprietor: University Research and Marketing, Inc., Baton Rouge, LA 70803-6100 (US)
(72) Inventor: Franke, Henry L., Baton Rouge, LA 70803 (US)
(74) Representative: Mitchell, Alan
(86) International application number: PCT/US92/11394
(87) International publication number: WO 93/13035

(56) References cited:
- WO-A-87/02697
- WO-A-92/03064
- US-A- 4 331 695
- US-A- 4 744 926
- US-A- 4 898 673
- US-A- 5 041 245

## Description

The present invention relates to a process for extracting oil from oil-bearing material, for example carbonaceous material, comprising the steps of (i) introducing an oil-bearing material into an extraction zone, (ii) introducing a normally gaseous solvent into said extraction zone, under conditions of pressure and temperature that are effective for liquefying the normally gaseous solvent, thereby resulting in extraction of at least a portion of said oil, (iii) passing the resulting mixture of extracted oil and solvent to a separation zone wherein the solvent is separated from the extracted oil, (iv) collecting the extracted oil, and (v) collecting the normally gaseous solvent in the gaseous state for recycle to said extraction zone. Such an oil extraction process is disclosed in US-A-4 898 673.

In many instances the characteristics of a particular carbonaceous material can be altered by the removal of certain compounds from the material. Examples of some compounds which it may be desirable to remove would include: phospholipids, fats, fatty acids, alcohols, waxes, gums, stearols, oil soluble proteins, flavonol, mineral oils, essential oils, and PCB's.

More particularly, oils derived from plant materials, such as oil-seeds, cereal brans, fruits, beans, and nuts, are the source of raw material for many important commercial products. For example, such oils from such plant materials are extensively used in cooking, low fat and fat free cooked food, in cosmetics, pharmaceuticals as carriers for insecticides and fungicides, in lubricants, and in myriad other useful products. Consequently, much work has been done over the years in developing improved processes for extracting oil from such materials.

One of the most widely used processes for removing oil from oil-bearing materials is solvent extraction. In solvent extraction, the oil-bearing material is treated with a suitable solvent, usually the lower carbon alkanes such as hexane, at elevated temperatures and low pressures, to extract the oil from the oil-bearing material. The resulting solvent/oil mixture is then fractionated to separate the valuable oil from the solvent, which is recycled. Most solvent extraction processes in commercial use today employ hexane as the solvent. While hexane extraction is the most widely used today, there are also teachings in the art in which normally gaseous solvents are used at both supercritical and subcritical conditions.

One such teaching is found in U.S. Patent No. 1,802,533 to Reid, wherein a normally gaseous solvent, preferably butane or isobutane, is liquefied by decreasing the temperature and/or increasing the pressure, then passing the solvent through a bed of the oil-bearing material in an extraction vessel. The solvent and extracted oil are then passed to a still where the solvent is separated from the oil. The extracted material must then be placed in another still where it is heated to remove solvent which remained entrained in the extracted material. There is no suggestion of obtaining a substantially solvent-free, dry, extracted material without an additional treatment step after extraction.

Another extraction process is taught in U.S. Patent No. 2,548,434 to Leaders wherein an oil-bearing material is introduced into the top of an extraction tower and passed counter-current to a liquefied normally gaseous solvent, such as propane, which is introduced at the bottom of the extraction tower. The tower is operated near critical conditions so that the solvent selectively rejects undesired color bodies, phosphatide, gums, etc. The resulting solvent/oil mixture can then be flashed to separate the solvent from the oil. In another embodiment, the solvent/oil mixture is first subjected to a liquid/liquid separation resulting in one fraction containing solvent and a less saturated fatty material, and another fraction containing solvent and a more saturated fatty material. The solvent is then flashed from both fractions. The extracted material remaining in the tower is drawn off and subjected to a vacuum flashing operation to remove entrained solvent.

U.S.Patent No. 4,331,695 to Zosel teaches a process for extracting fats and oils from oil-bearing animal and vegetable materials. The material is contacted with a solvent, such as propane, in the liquid phase and at a temperature below the critical temperature of the solvent to extract fat or oil from the material. The resulting solvent/oil mixture is treated to precipitate the extracted fat or oil from the solvent by heating the solvent to above the critical temperature of the solvent without taking up heat of vaporization. The extracted residue (shreds) is then treated to remove any entrained solvent, either by blowing it directly with steam, or by indirect heating followed by direct steaming.

In U.S. Patent No. 5,041,245 to Benado a continuous solvent extraction method utilizing propane is disclosed to remove oils from vegetable matter, particularly rice bran. According to this method a sufficient amount of liquid sealing medium is first injected into the vegetable matter in a feeding zone to form a dough-like plastic mass which is compacted and transported by a conveyor assembly to an extraction zone to form a bed. Propane is then introduced into the bed of the extraction zone being operated at 102°-122°F (38.9-50.0°C). and 125-250 psi (862-1724 kPa) to react with the bed material. The miscella of extracted oil and solvent resulting from this from the reaction of propane and bed material is then separated from the remaining solid residue of the bed material. The propane is then separated from the extracted oil by evaporation or volatization methods. The preferred separation method is to first subject the miscella to near its critical pressure (600 psi (4137 kPa) for propane/rice bran oil mixture) and significantly elevated temperatures (190°-200°F (87.8°-93.3°C). for propane/rice bran oil mixture) which can also be near critical. This yields a high solvent light phase (98% solvent, 2% bran oil) and an oil-enriched heavy phase (60% solvent, 40% bran oil). The oil enriched heavy phase under reduced pressure is then delivered to a heater-evaporator and further treated to form a more oil-enriched heavy phase (10% solvent, 90% bran oil). This phase is then de-pressurized to about one atmosphere, and further treated in a second combined heater-evaporator stage to produce an oil stream having not more than 1-2% propane. Further similar treatment of this oil stream could be accomplished to remove additional propane if desired.

Other references which teach solvent extraction of oil-bearing materials, with normally gaseous solvents, include U.S. Patent Nos. 2,682,551 to Miller; and 2,560,935 to Dickinson. In each of these processes, the extracted material must be further processed to remove entrained solvent.

While prior art extraction methods, particularly hexane extraction, have met with various degrees of commercial success, there still remains a need in the art for an improved solvent extraction method which is more energy and cost efficient, which can effectively remove the solvent from the extracted compounds to meet government regulations, which is especially suitable for the processing of certain troublesome oil-bearing materials, as well as which allows greater selectivity of the compounds removed from the carbonaceous material and which results in the recovery of de-oiled products having superior nutrient and health characteristics.

In solvent extraction of oil from carbonaceous materials, such as vegetable material, one problem has been fluidization problems in the bed formed by the material in the extraction vessel. This has lead to the need to pre-pelletize or compact the material before placing the material in the extraction vessel to increase the material bed permeability and allow the solvent to penetrate and flow through all portions of the material bed. This problem is particularly acute in those situations where a significant amount of the vegetable material are of small particle size, e.g., 100 to 400 mesh.

When the carbonaceous material contains significant amounts of oil, current solvent extraction methods have been inefficient for removing most or all of the oil. Examples of such material would include jojoba, cocoa, rape seed, and canola which are 30% - 60% by weight oil. In these instances it has been necessary to first press the material to remove a majority of the oil before using solvent extraction methods to remove the remaining amounts of oil. Alternatively, the material could be first mechanically ground or pulverized to render the oil more accessible to reaction with the solvent. This latter method is difficult if the material has a high oil content.

In many of the instances where the material must first be pressed it is necessary to subject the material to high temperatures (200°-360°F) (93.3°-182.2°C) to effectively remove the oil. In food material such high temperatures can result in deleterious effects to the desirable characteristics of the material, such as protein denaturing, vitamin destruction, and creation of carbonic acids which effect the aromatic odor of food material such as spices and herbs.

One particularly troublesome material is rice bran, one of the most plentiful and nutritious food sources known to man, but which is greatly under utilized. This is primarily because immediately following the milling step, a lipolytic enzyme in the bran is activated which catalyzes the hydrolysis of the glyceryl esters of the free fatty acids (FFA) present in the lipids. This is measured by FFA increase, which is rapid at typical atmospheric storage conditions. This starts fatty acid formation and bran rancidity in a matter of minutes after milling, an eventually renders it inedible to humans after several days of storage. Consequently, rice bran, as a source of cil and food, is under utilized, particularly in less developed countries. While the food industry struggles to find ways to obtain a rice bran, and rice bran oil, free of these undesirable characteristics, more and more beneficial uses and nutritive values are being discovered for these products. For example, it has recently been reported that rice bran fiber is effective for lowering cholesterol in humans. As a result, a tremendous demand has been created for a process which can stabilize the rice bran after milling, or a process which will allow for the extraction of oil while at the same time stabilizing the oil and bran against further fatty acid formation.

Other problems are encountered with different food products. For example, in eggs it is desirable to remove the cholesterol from the yoke, yet have the eggs retain their natural proteins not denatured, texture, and taste when cooked. This has not been possible with the present known methods of solvent extraction.

As another example, in many commercially available seasonings and food coating products one problem has been the inability to remove certain fats while retaining the flavoring of the products.

Still another problem has been to create seasoned or unseasoned food coatings that have dielectric characteristics which increase the ability of the coating to adhere to the food product during handling and cooking. A further problem with food coatings occurs when the food product is mircowaved. The moisture in the food product permeates the coating during the cooking process resulting in a soggy, unappetizing-looking crust.

Still other problems occur when trying to remove oils and fats from fried products such as potato chips and french fries. Current methods result in undesirable flavor or texture changes because of the inability of these methods to selectively remove only the undesired compounds.

The treatment of animal products by present solvent extraction processes to remove fats and cholesterol have not been commercially successful because of the dilatory effect on the taste, color or texture characteristics of the cooked animal products.

The invention relates to an oil extraction process as initially defined and is characterised in that (a) said oil extraction process is one in which steps (i) to (iii) are performed in succession, (b) the introduced oil-bearing material forms a bed of such material in said extraction zone, (c) air is evacuated from said extraction zone prior to step (ii) and (d) said mixture of extracted oil and solvent is passed to the separation zone in step (iii) under conditions that will maintain the solvent in the liquid state by introducing into said extraction zone a gas which at a given temperature liquefies at a higher pressure than the solvent.

In a preferred way of performing the present invention, the gas that is introduced while the material/solvent mixture is passed to the separation zone can be nitrogen, methane, or CO₂, or other gas having dissimilar and greater vaporization conditions from the solvent, which gas is used to not only purge the extracted oil/solvent mixture from the extraction zone, but to also maintain the temperature and pressure so that the first introduced solvent is maintained in liquid form during a purging of the extraction zone using inert gas and movement to the separation zone.

In another preferred embodiment of the present invention, the material in the extraction zone is stressed by increasing for short periods of time the pressure differential between the top and bottom of the extraction zone bed.

For a better understanding of the invention and to show how the same may be carried into effect, reference will now be made, by way of example, to the accompanying drawings, in which:-

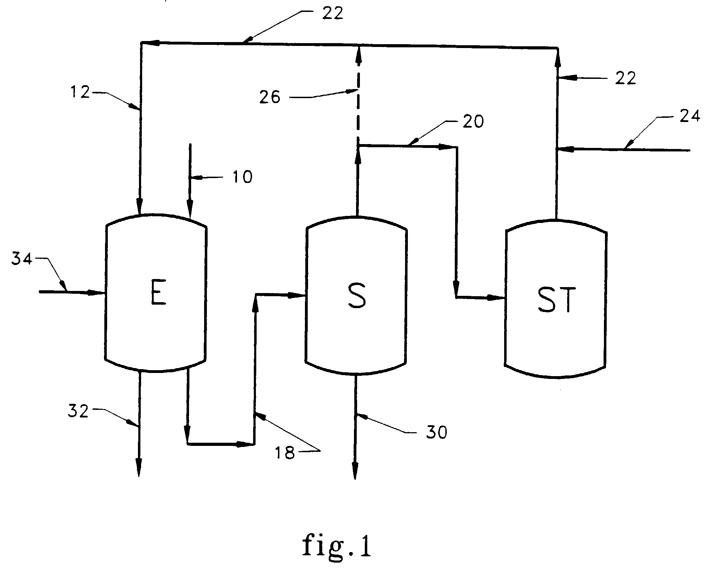

Figure 1 is a simplified schematic drawing of a preferred solvent extraction process of the present invention.

Figure 2 is a schematic representation of the reaction vessel utilized in experiments described below.

Figure 3 is a graphical representation of the results of tests run utilizing the solvent extraction process in extracting oils from rice bran.

Figure 4 is a graphical representation of the results of tests run utilizing the process of this invention in extracting oils from certain commercially available cooked food products.

Figure 5 is a graphical representation of the results of tests run utilizing the solvent extraction process indicating the effect on the flavor, color and shape of certain commercially available cooked food products.

Figure 6 is a graphical representation of the results of tests run utilizing the process of this invention in extracting butter fat from certain name brand cocoa powders.

Figure 7 is a tabular representation of the characteristics of a rice bran de-oiled in accordance with the process of this invention.

Any oil-bearing material can be treated to selectively remove substances by the solvent extraction method disclosed herein. Examples of such materials include soybeans, cottonseed, linseed, and cereals such as rice bran, wheat bran, and corn meal, as well as small particle products such as food coatings, meats. Examples of the types of substances which can be removed from such materials include phospholipids, fats, fatty acids, alcohols, waxes, gums, stearols, oil soluble proteins, flavonol, mineral oils, essential oils, oils from cooked or processed food, and PCB's.

Solvents suitable for use in the process are any solvent which is normally a liquid at extraction conditions, and in which the compound to be extracted is soluble under the reaction conditions. The selection of the appropriate solvent (or combinations of solvents) can thus be made based on its (their) known solubility characteristics. If there is to selective removal of substances, then the solubility of those substances must be considered in the selection of the solvent (or combination of solvents), as well as the operating conditions used in the process. In certain circumstances, such as when treating food products, other known characteristics of the solvent may need to be taken into account.

Without limiting the scope of this invention as defined by the appended claims, preferred ways of performing it are described as applied to the treatment of certain food products to remove oils such as waxes, gums, fats, and/or cholesterol.

Depending on the particular type substances being removed solvents suitable for use in the extraction process would include any solvent which is normally a liquid at extraction conditions, such as hexane, or which can be converted to a liquid at extraction conditions. Preferred solvents are those which are normally gaseous at typical atmospheric conditions. That is, those which are a gas at about room temperature (about 70°F (21.1°C)) and atmospheric pressure. Examples of preferred solvents include methane, ethane, propane, butane, ethylene, propylene, butylene, sulfur dioxide, carbon dioxide, CHF₃, CClF₃, CFBr₃, CF₂=CH₂, CF₃-CF₂-CF₃, CF₄, CF₄, CH₃-CF₃, CHCl₂, ammonia, nitrogen, dichlorodifluor methane, dimethylether, dimethylsufaoxide (DMSO), acetone, nitreous oxide, methyl fluoride, and halogenated hydrocarbons or combinations thereof which are normally gaseous as indicated, as well as various alcohols. For removal of oil from rice bran and similar grains preferred solvents are propane, butane, and mixtures thereof; and, more preferred is propane.

The weight ratio of solvent to oil-bearing material will be from 1:1 to 2:1, preferably from 1.2:1 to 1.5:1. A co-solvent, such as a C₂ to C₆ alcohol, preferably, ethanol, may be used. If a co-solvent is used it may be used in place of at least 0.5 to 90 vol.%, preferably 5 to 50 vol.%, and more preferably from 5 to 25 vol.%, of the primary solvent.

Referring now to the Figures, oil-bearing material is introduced into extraction zone E via line 10. The extraction zone can be comprised of one or more vessels suitable for the volumes, temperatures, and pressures employed. For illustration purposes, only one vessel is shown, but in actual practice it would be preferred to use two or more vessels. In this way, while a vessel has undergone extraction and is being unloaded, another vessel can be loaded with the oil-bearing material to continue the extraction process. This would represent a continuous type of operation. Unlimiting types of vessels which may be used in the extraction zone include fixed-bed, slurry-bed, moving-bed, as well as reactors in which the oil-bearing material is fed therethrough on or in a bucket, a belt with perforations, or with a screw. It is preferred that the vessel be one in which a limited fixed-bed of oil-bearing material can be loaded with a sealing piston. It is preferred to evacuate the vessels of the extraction zone prior to the introduction of solvent, especially if the solvent is propane which may form an explosive mixture with air. The evacuation can be conducted in any suitable manner, such as, by use of a vacuum pump or by merely venting the air as it is displaced by the solvent during solvent loading or circulating N₂ or CO₂ through the bottom and out the top. Because certain solvents, such as propane, can become explosive when mixed with air special conditions or steps may be needed if such a solvent is selected. Such conditions or steps are well known in the art. Of course any propane which contaminates the vented air can be separated by pressure or membranes, etc. or burned-off as a heat source during venting.

In one way of performing the present invention, the extraction zone be flushed with inert gas prior to introduction of the solvent. That is, by displacing the air in the extraction zone with the inert gas. It is preferred that the inert gas be at elevated temperatures, for example at a temperature from about 80° to 400°F (26.7°-204.4°C), but which does not heat the material beyond 140°F (60°C), preferably from about 55° to 120°F (12.8°-48.9°C), during the heat transfer. This hot inert gas flush will act as evaluating the extraction zone of air as well as heating, or drying, the oil-bearing material.

It is preferred that the oil-bearing material be dry before being contacted with the solvent to mitigate any freezing which may occur during the process. While the hot inert gas can be used to dry the oil-bearing material, it may also be dried by any other appropriate means, such as by heating it by conventional means, including the use of microwaves. Furthermore, after flushing the extraction zone with inert gas, the inert gas can be used to pressurize the extraction zone so that when the normally gaseous solvent is introduced into the extraction zone it is immediately transformed to the liquid state to prevent referation freezing.

Returning to the Figures, the normally gaseous solvent is fed into the extraction zone via line **12** in the vapor state, whereupon an effective pressure and temperature which will cause the normally gaseous solvent to liquefy. It is also within the scope of this invention that the normally gaseous solvent be introduced into the extraction zone already in a liquid state. The inert gas can also be used to pressurize the extraction zone so that as the normally gaseous solvent enters the extraction zone, it is converted to its liquid form. Typically, the extraction temperature will be from about ambient temperature, up to, but not including, the temperature at which degradation, or denaturing, of the proteins of the oil-bearing material is initiated. It is also desirable to protect the vitamins against degradation. This temperature will typically range from about ambient temperature to about 140°F (60°C), preferably from about 60°F to 130°F (15.6°-54.4°C), more preferably from about 70°F to 120°F (21.1°-48.9°C), most preferably from about 70°F to about 110°F (21.1°-43.3°C). For heat sensitive material such as dried egg yolks it is preferred that the temperature be 60°-90°F (15.6°-32.2°C). It is within the scope of this invention as defined by the appended claims to operate the extraction zone at a temperature and/or pressure which will selectively remove the oils, but leave any substances such as gums and waxes in the extracted oil-bearing material, or to selectively extract the phospholipid gums and waxes with the heavier oil fractions. Such a temperature will typically be less than about 80°F (26.7°C) at about atmospheric pressure. Of course, the temperature may vary somewhat at different pressures. In addition, these temperatures may vary for any given oil-bearing material and solvent combination, and the precise conditions are within the skill of those in the art given the teaching herein. After the oil has been removed, it is then possible to similarly treat the remaining material, but at slightly elevated temperatures and/or pressures conditions to remove the waxes and gums. The above stated conditions are the preferred conditions when the oil-bearing material is rice bran and the solvent is propane. Since the de-oiled rice bran is a commercially important product it is preferred that the temperature not be so high that the proteins and vitamins of the rice bran are destroyed during the extraction process. The pressure maintained in the extraction zone will be a pressure which is effective for maintaining the solvent as a liquid, and to drive the oil/solvent mixture rapidly through the vessel and to the separation zone. While this pressure will be dependent on such things as the particular solvent and temperature employed, for propane it will typically range from less than atmospheric pressures to about 250 psig (1727 kPa), preferably from about -15" Hg (-38.1 cmHg) to 200 psig (1382 kPa), more preferably from about 100 psig to 140 psig (691-967 kPa).

The extraction zone can also be subjected to conditions which will repeatedly stress and relax the oil-bearing material and/or solvent molecules. This is believed to create a washing effect that enhances the ability of the solvent to extract the oil from the material. In addition it is believed that such pressure pulsing aids in the separation of the heavier oil from the lighter solvent after the oil has been extracted from the material and while it is flowing toward the bottom of the reactor. Such stressing and relaxation are effected to create pressure differentials between the top and bottom of the extraction zone of at least 0.25 psig. The pressure differential can be as great as will permit, under the temperature and pressure conditions of the material bed, the solvent passing through the exit port of the reactor to remain as a liquid.

This pressure differential can also be created by actuating and deactuating a piston or diaphragm in the pressure or solvent line. The stressing and relaxation conditions can also be caused by sonication i.e., by subjecting the ingredients of the extraction zone to sonic energy.

In a particularly preferred method a second solvent or inert gas is introduced to the top surface of the extraction zone to increase the pressure and then briefly open valve in the separation zone to cause the second solvent or inert gas to displace part of the propane/oil mixture through the bottom filter. In this manner it acts as a fluid piston. This action allows the bed to be comprised of much smaller particles than has generally heretofore be used in solvent extraction processes. There is no need to pre-pelletize such particles before treatment.

This also allows the utilization of the forces of polarity in combination to extract different materials at the same time by using pressure from the second gas. By selecting a second solvent having a different polarity that solvent can be used to remove different substances, such as cholesterol from egg powders.

The period of time that the valve remains open would be sufficient to permit at least some of the extracted oil and propane to flow through the bottom filter in the reaction vessel and into the separation zone. The extracted oil and propane can at that time be separated if desired. After the valve is closed additional liquid propane or N₂ is then added to the bottom of the extraction zone to again raise the pressure and clear the filter in the extraction zone and purge the second solvent or inert gas. If another compound was extracted by the second solvent, then the mixture of the second solvent and this other compound will be forced through the top filter of the extraction zone and into an upper separation zone where the other compound can be recovered by known separation techniques.

In an alternative arrangement the bottom valve can be continuously open, and the top valve of the reactor through which the second gas enters the extraction bed can periodically be opened. This is achieved by setting the pressure at the top valve sufficient higher than the desired pressure in the extraction bed, and by opening the top valve before the pressure at the bottom valve reaches a pressure too low to maintain the extraction bed pressure at the desired level.

The pulsing procedure may be repeated as many times as desired and with the proper construction of the reaction vessel utilizing many different solvents. The number of pulsings, as well as the amount of the pressure differential, and the time between pulses, depends on the accessibility of the oil in the oil bearing material for contact by the solvent, as well as the polarity strengths of the substances involved; i.e., how strongly bonded the oil is to other substances, such as the proteins, in the product.

The extraction can also be accomplished in more than one extractions; i.e.,the oil-bearing material can undergo several extractions with fresh solvent in order to assure more complete removal of oil. For example, a first extraction may leave as much as about 1 to 3 vol.% of the oil in the material which weight percent is based on the total weight of the extracted material. A substantial amount of this residual oil can then be removed by subjecting the oil-bearing material to at least one other extraction with fresh solvent. It is preferred that less than 1 wt.%, more preferably less than 0.1 wt.% of the extracted material represent that residual oil fraction in the de-oiled material. Of course, the economics of the process must be considered so that the cost of additional extractions does not exceed the value of the added products from the additional extractions.

The oil-bearing material preferably sits on a filtering means, such as a screen, or membrane filter, or perforated tray (not shown), wherein the solvent passes there-through with the extracted oil. It is understood that an alternative process feature is one wherein the filtering means is situated between the extraction zone and the separation zone. The solvent is maintained in contact with the oil-bearing material for an effective period of time. That is, for a period of time which will result in the extraction of a predetermined amount of oil. Of course, if too much oil still remains in the oil-bearing material after extraction, it may be subjected to one or more additional extraction cycles or the extraction time extended with pressure pulsing according to the condition of the oil-bearing material feedstock or the desired product to be recovered.

The solvent/oil mixture is passed from the extraction zone via line **18** to separation zone **S** under conditions which will maintain the solvent as a liquid. It is important that the pressure be maintained in the extraction zone during removal of the solvent and oil not only to prevent unnecessary evaporation of solvent during removal which may result in freezing of the extracted material, but also to not complicate the removal of excess solvent in the material to less than that permitted by government regulations. A preferred method of maintaining the pressure in the extraction zone during removal of solvent and oil is to introduce a gas which has dissimilar vaporization condition characteristics from the solvent, more particularly vaporization condition characteristics greater than the solvent so that it can be used to add pressure and heat to the extraction zone during the removal of the oil/solvent mixture to prevent freezing of the oil bearing material, the remaining oil/solvent mixture, and the extracted mixture.

Such gases would include an inert gas, such as nitrogen, into the extraction zone to replace the leaving solvent/oil mixture. By "inert gas" is meant a gas which will not cause a deleterious reaction of the extracted oil or extracted material. The preferred inert gas is nitrogen, carbon dioxide or methane. More preferred is nitrogen. The gas replaces the solvent/oil mixture in the extraction zone and maintains substantially the same pressure throughout the solvent/oil removal step. This prevents freezing of the extracted material. It is preferred that the inert gas which is introduced into the extraction zone to displace the solvent/oil mixture be heated. That is, that it be at a temperature from 60°F to 140°F (15.6°-60°C), preferably at a temperature from 100°F to 120°F (37.8°-48.9°C). This heated inert gas can enhance the recovery of any residual oil an solvent left in the extracted material.

It is also preferred that in designing the reactor vessel and in selecting the solvents to be used, the specific gravities of the substances to be removed and the specific gravity of the solvents be as different as possible. This has found to be beneficial in the separation of the oil and solvent from each other, as well as the oil bearing material, during the pulsing stages. For example the large differential in the weight of propane and oil causes the propane to separate from the oil and move upward in a purified form to contact more oil still bound in the rice bran while the extracted oil rapidly moves toward the separation zone for removal. This reduces the amount of solvent needed to remove the oil and/or reduces the amount of separation of solvent from the extracted oil.

It is also within the scope of this invention as defined by the appended claims that solvent vapor be passed through the de-oiled material either in place of the inert gas or following the passage of inert gas. This solvent vapor will act to remove at least a portion of the residual oil/ solvent mixture left in the de-oiled material.

The separation zone is run under conditions which will enhance the separation of solvent from the oil. It is preferred that some heat be applied preferably from a slightly heated solvent or inert gas, to enhance this separation. Other methods which can be employed for operating the separation zone to enhance solvent/oil separation include distillation, centrifugation, the use of membranes and reduced pressures, and/or cryogenics. The separated solvent is then passed, via line **20**, to storage zone **ST** where it can be recycled via line **22** to the extraction zone. Makeup solvent, if needed, can be added via line **24**. At least a portion of the recovered solvent may also be recycled directly to the extraction zone via line **26**.

It is also within the scope of the present invention as defined by the appended claims that the separation be conducted in more than one vessel. For example, the solvent/oil mixture (which may also include some of the second dissimilar gas) may first be subjected to a first separator vessel wherein a liquid/liquid (and gas if the second dissimilar gas is present) separation occurs. That is, the separation vessel is under enough pressure so that the solvent will not vaporize. The liquid solvent is separated from the oil phase. The liquid solvent fraction is then introduced into a second separation vessel wherein a liquid/vapor separation occurs. That is, the solvent is vaporized and collected in a storage vessel and any residual oil fraction is separately collected. This second vessel will typically be smaller than the first and may include the use of a vacuum or other conventional means to aid in the vaporization of the solvent.

If gums and waxes, or certain oils, are present in the extracted oil fraction, they may be solidified out of the oil by cooling. The cooling can be provided by use of the vaporized solvent which will still be cool owing to the vaporization step.

The substantially solvent-free oil is collected via line **30**. The de-oiled oil-bearing material can be collected from the extraction zone by any appropriate means. For purposes of simplification, the de-oiled material is shown in the Figure as being collected via line **32**.

In those situations where the oil-bearing material is one which is unstable because of the production of fatty acids, such as rice bran, a stabilizing agent can be added to the extraction zone via line **34**. Any appropriate means can be used to add the stabilizing agent. That is, it can be sprayed directly onto the oil-bearing material prior to the material being introduced into the extraction zone. It can also be introduced into the extraction zone either directly, (as shown in the figure) or in combination with the solvent. Rice bran, the preferred oil-bearing material, upon milling, activates lipolytic enzymes which catalyze the production of free fatty acids. These free fatty acids cause the bran to become rancid. Examples of stabilizers which can be used to stabilize rice bran include an inert gas such as nitrogen, food grade acids and alcohols, preferably ethanol, mercaptans, and enzyme inhibitors, protein, and/or peptides. Preferred are food grade acids and alcohols, examples of which include citric acid, ascorbic acid, lactic acid, gluconic acid, malic acid, ethanol. More preferred are citric acid and ascorbic acid, with ascorbic acid being most preferred.

The rice bran which results from the preferred embodiment of the present invention is unique in the industry in commercial quantities. That is, not only are the fatty acids stabilized, but deleterious ingredients which contribute to poor taste are also absent. Furthermore, the de-oiled rice bran also contains more vitamin B's and even protects the cyanocobalamin (vitamin B-12) than an identical bran which has been extracted by use of a conventional hexane extraction process. Consequently, the de-oiled rice bran fills a long felt need in the art.

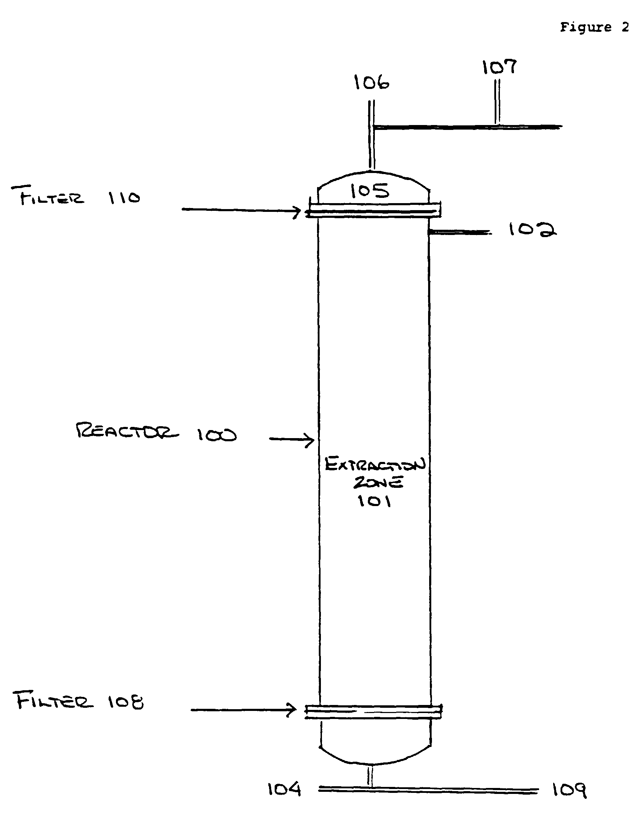

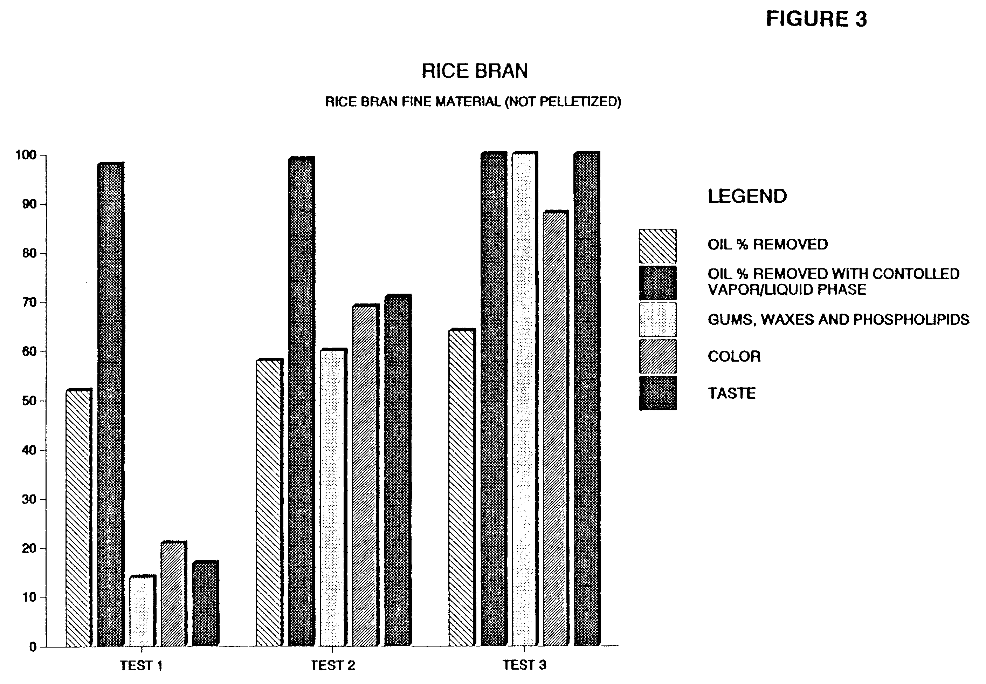

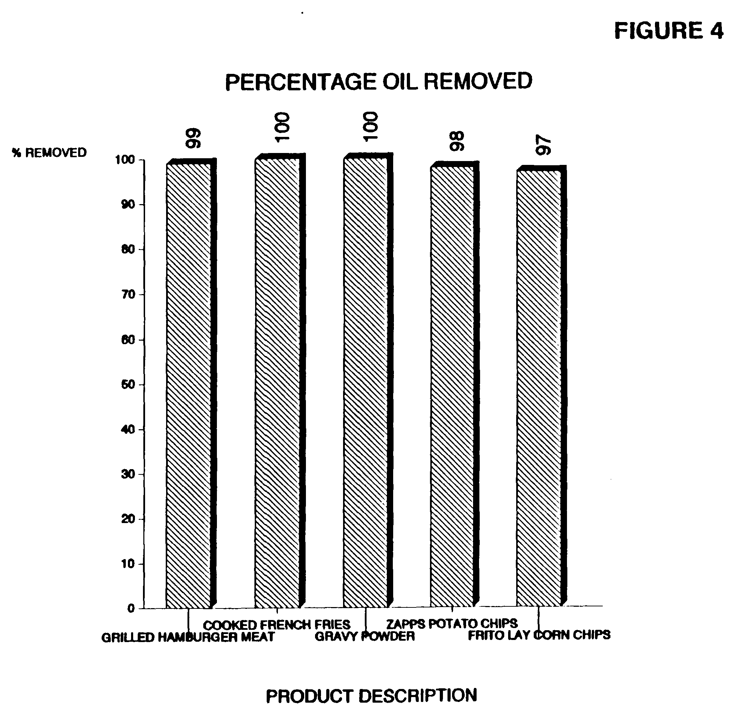

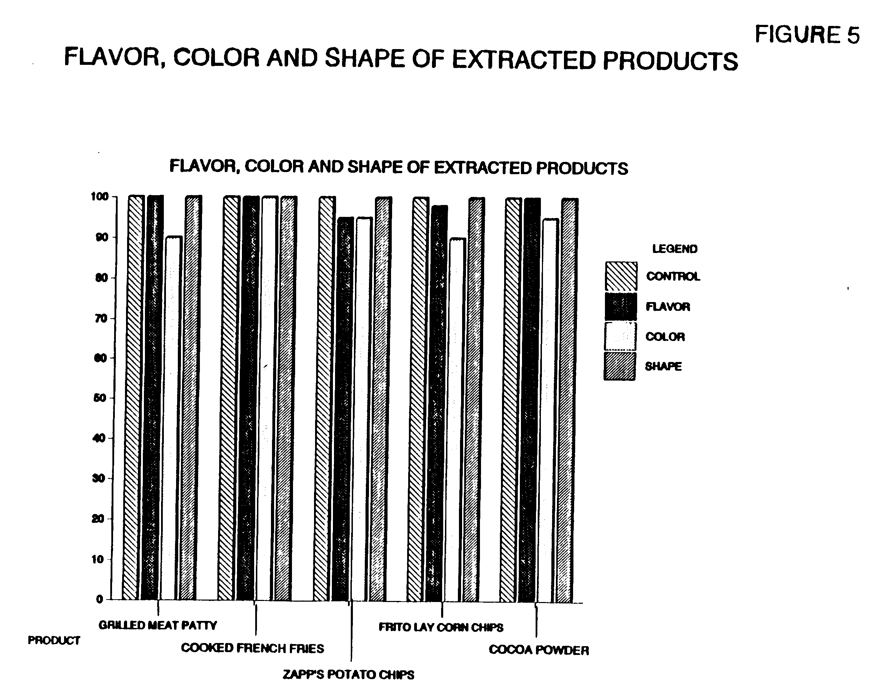

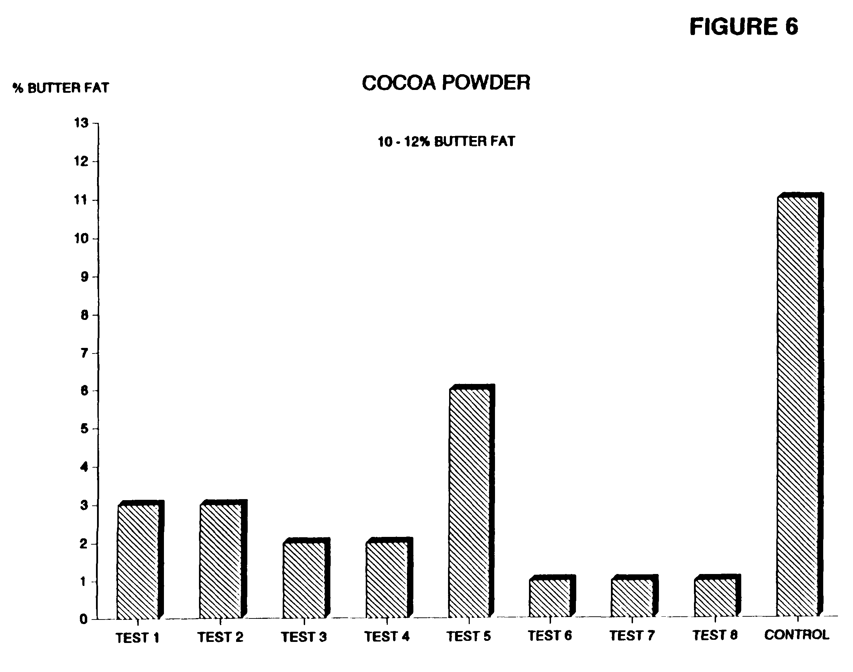

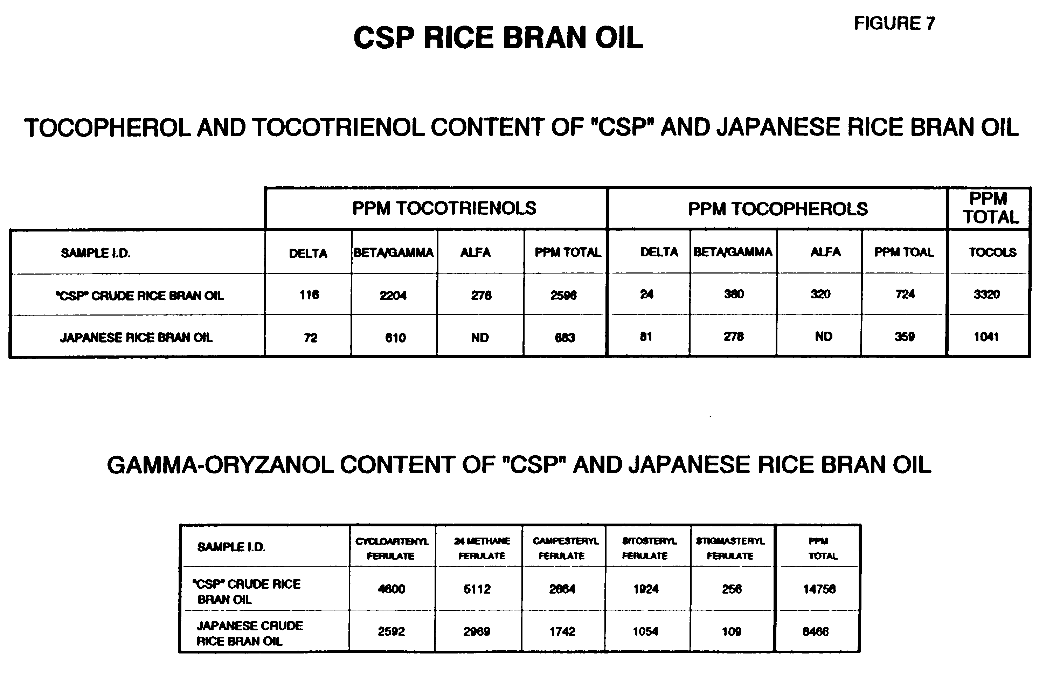

Utilizing the reactor vessel 100 schematically illustrated in Figure 2 the experiments results of which are described in Figures 3 - 7 were conducted as follows. The rice bran or other material was introduced to the extraction zone **101** of the reactor **100** via line **102**. Valve **103** operatively attached to line **102** was closed. Nitrogen was then introduced into the bottom of extraction zone **101** via line **104** in sufficient quantity to purge the air from extraction zone **101** into upper separation zone **105**. The air was then purged from upper separation zone **105** through line **106** into the atmosphere. The pressure in extraction zone **101** was then adjusted and maintained at 90 psi (621 kPa). Propane was then introduced through line **104** into extraction zone **101** in quantities sufficient to purge the nitrogen from the reactor **100** through line **106** and to increase the pressure within extraction zone **101** to 127 psi.

Nitrogen was then reintroduced through line **107** in quantities sufficient to create a pressure differential between the top and bottom of extraction zone **101** of 1-50 psi (7-345 kPa). Valve **106** was then cracked open until the pressure differential has been dissipated at which time valve **106** is closed. This procedure is repeated for about ten minutes by re-introducing nitrogen through line **107**.

Nitrogen was then used to purge extracted oil/propane mixture from the evaporation zone **101** and from reactor **100** through line **109**. At all times during the procedure to this phase, the pressure and temperature was maintained at levels to prevent the propane from vaporizing while the oil/propane mixture was forced through the 400 mesh bottom filter **108**.

Vacuum to 15" Hg is completed and nitrogen at 80°F (26.7°C). was then circulated through the evaporation zone **101** to remove all trace amounts of propane which remained in the de-oiled rice bran which was removed from reactor 100 through line 106.

Upper 200 mesh filter 110 is removed and the de-oiled rice bran was removed from reactor 100. The extracted N₂/oil/propane mixture removed from reactor 100 were separated by alternately cooling and heating, and use of pressure in a separate vessel 200 by well known means.

The de-oiled rice bran or other material was then analyzed. The results are summarized in Figures 3 through 7.

With the disclosed oil extraction process, it is possible to provide a solvent process for the selective removal of various oils from food products that allows for cost effective removal of the solvent from the extracted oils and de-oiled products which meet current governmental regulations for low fat and fat free claims.

An important advantage is the ability to provide a solvent process for the selective removal of undesirable substances from food products which does not destroy the flavor, texture and/or color characteristics of the food product.

The solvent extraction process can be capable of selectively removing undesirable substances from food coatings which also increases their dielectric characteristics.

The disclosed solvent extraction process is suitable for the selective removal of undesirable substances from food coatings which also effects better sealing of moisture in the food product during cooking resulting in crisper, more appetizing products.

It is also possible to provide novel oils and other substances having more desirable food consumption characteristics.

The described process can provide a novel rice bran oil, a novel de-oiled rice bran, a novel meat product, or a novel food coating product.

## Claims

1. A process for extracting oil from an oil-bearing material, comprising the steps of (i) introducing an oil-bearing material into an extraction zone, (ii) introducing a normally gaseous solvent into said extraction zone, under conditions of pressure and temperature that are effective for liquefying the normally gaseous solvent, thereby resulting in extraction of at least a portion of said oil, (iii) passing the resulting mixture of extracted oil and solvent to a separation zone wherein the solvent is separated from the extracted oil, (iv) collecting the extracted oil, and (v) collecting the normally gaseous solvent in the gaseous state for recycle to said extraction zone;
characterised in that (a) said oil extraction process is one in which steps (i) to (iii) are performed in succession, (b) the introduced oil-bearing material forms a bed of such material in said extraction zone, (c) air is evacuated from said extraction zone prior to step (ii) and (d) said mixture of extracted oil and solvent is passed to the separation zone in step (iii) under conditions that will maintain the solvent in the liquid state by introducing into said extraction zone a gas which at a given temperature liquefies at a higher pressure than the solvent.

2. A process according to claim 1, wherein said oil-bearing material is a cooked food product.

3. A process according to claim 1 or 2, wherein the normally gaseous solvent is selected from propane, butane, and mixtures thereof.

4. A process according to claim 1, 2 or 3, wherein the evacuation of air from said extraction zone prior to step (ii) is performed by introducing a gas, having dissimilar vaporisation condition characteristics from the solvent, into said extraction zone to displace said solvent in the liquid state and extracted oil from said extraction zone while maintaining said temperature and pressure conditions in said extraction zone.

5. A process according to claim 4, wherein the gas having dissimilar vaporisation characteristics from the solvent is an inert gas.

6. A process according to claim 5, wherein the normally gaseous solvent is propane and the inert gas is nitrogen or carbon dioxide.

7. A process according to any preceding claim wherein the oil-bearing material is selected from soybeans, cottonseed, linseed, rice bran, wheat bran, corn meal and cocoa.

8. A process according to any preceding claim, wherein the normally gaseous solvent is periodically stressed by fluctuating the pressure in the extraction zone by at least 0.25 psig (103 KPa).

9. A process according to any preceding claim, wherein a co-solvent is used, which co-solvent is selected from the C₂ to C₆ alcohol.

10. A process according to claim 2 or any one of claims 3 to 9 as appended to claim 2, wherein the cooked food product is a fried food product.

11. A process according to claim 9, wherein the fried food product is potato chips or french fried potatoes.

12. A process according to claim 2, wherein the cooked food product is a meat food product.

13. A process according to claim 1, wherein the evacuation of air from the extraction zone is effected by applying a vacuum.

14. A process according to any preceding claim, wherein vacuum is applied to the separation zone after the solvent has been separated from the extracted oil.

## Patentansprüche

1. Prozeß zum Extrahieren von Öl aus Öl-enthaltendem Material, umfassend die folgenden Schritte: (i) Einleiten eines Öl-enthaltenden Materials in eine Extraktionszone, (ii) Einleiten eines normalerweise gasförmigen Lösungsmittels in die Extraktionszone unter Bedingungen von Druck und Temperatur, die zur Verflüssigung des normalerweise gasförmigen Lösungsmittels effektiv sind, was dadurch zu einer Extraktion wenigstens eines Teils des Öls führt, (iii) Leiten der sich ergebenden Mischung des extrahierten Öls und des Lösungsmittels an eine Trennungszone, an der das Lösungsmittel aus dem extrahierten Öl getrennt wird, (iv) Sammeln des extrahierten Öls, und (v) Sammeln des normalerweise gasförmigen Lösungsmittels in dem gasförmigen Zustand zur Wiederaufbereitung an die Extraktionszone;
**dadurch gekennzeichnet, daß**
(a) der Ölextraktionsprozeß einer ist, bei dem Schritte (i) bis (iii) nacheinander ausgeführt werden, (b) das eingeleitete Öl-enthaltende Material ein Bett aus einem derartigen Material in der Extraktionszone bildet, (c) Luft von der Extraktionszone vor dem Schritt (ii) evakuiert wird und (d) die Mischung aus dem extrahierten Öl und dem Lösungsmittel an die Trennungszone im Schritt (iii) unter Bedingungen geleitet wird, die das Lösungsmittel in dem flüssigen Zustand halten werden, indem in die Extraktionszone ein Gas eingeleitet wird, welches sich bei einer gegebenen Temperatur bei einem höheren Druck als das Lösungsmittel verflüssigt.

2. Verfahren nach Anspruch 1,
**dadurch gekennzeichnet, daß** das Öl-enthaltende Material ein gekochtes Nahrungsmittelprodukt ist.

3. Verfahren nach Anspruch 1 oder 2,
**dadurch gekennzeichnet, daß** das normalerweise gasförmige Lösungsmittel aus Propan, Butan und Mischungen davon gewählt ist.

4. Prozeß nach Anspruch 1, 2 oder 3,
**dadurch gekennzeichnet, daß** die Evakuierung von Luft aus der Extraktionszone vor dem Schritt (ii) ausgeführt wird, indem ein Gas, das unterschiedliche Verdampfungsbedingungscharakteristiken zu dem Lösungsmittel aufweist, in die Extraktionszone eingeleitet wird, um das Lösungsmittel in dem flüssigen Zustand zu verdrängen und Öl aus der Extraktionszone zu extrahieren, während die Temperatur- und Druckbedingungen in der Extraktionszone beibehalten werden.

5. Verfahren nach Anspruch 4,
**dadurch gekennzeichnet, daß** das Gas, das unterschiedliche Verdampfungscharakteristiken zu dem Lösungsmittel aufweist, ein Edelgas ist.

6. Verfahren nach Anspruch 5,
**dadurch gekennzeichnet, daß** das normalerweise gasförmige Lösungsmittel Propan ist und das Edelgas Stickstoff oder Kohlenstoffdioxid ist.

7. Verfahren nach einem der vorangehenden Ansprüche,
**dadurch gekennzeichnet, daß** das Öl-enthaltende Material aus Sojabohnen, Baumwollsamen, Linsensamen, Reiskleie, Weizenkleie, Kornmehl und Kakao gewählt ist.

8. Prozeß nach einem der vorangehenden Ansprüche,
**dadurch gekennzeichnet, daß** das normalerweise gasförmige Lösungsmittel periodisch durch Ändern des Drucks in der Extraktionszone um wenigstens 0,25 psig (103 KPa) gedehnt wird.

9. Prozeß nach einem der vorangehenden Ansprüche,
**dadurch gekennzeichnet, daß** ein Co-Lösungsmittel verwendet wird, wobei das Co-Lösungsmittel aus dem C₂-C₆-Alkohol gewählt wird.

10. Prozeß nach Anspruch 2 oder irgendeinem der Ansprüche 3 bis 9 so wie sie an den Anspruch 2 angehängt sind,
**dadurch gekennzeichnet, daß** das gekochte Nahrungsmittelprodukt ein gebratenes Nahrungsmittelprodukt ist.

11. Prozeß nach Anspruch 9,
**dadurch gekennzeichnet, daß** das gebratene Nahrungsmittelprodukt Kartoffelchips oder Pommes frites sind.

12. Prozeß nach Anspruch 2,
**dadurch gekennzeichnet, daß** das gekochte Nahrungsmittelprodukt ein Fleischnahrungsmittelprodukt ist.

13. Verfahren nach Anspruch 1,
**dadurch gekennzeichnet, daß** die Evakuierung von Luft aus der Extraktionszone durch Anwendung eines Vakuums bewirkt wird.

14. Prozeß nach einem der vorangehenden Ansprüche,
**dadurch gekennzeichnet, daß** ein Vakuum an die Trennungszone angelegt wird, nachdem das Lösungsmittel aus dem extrahierten Öl getrennt worden ist.

## Revendications

1. Procédé pour extraire de l'huile d'un matériau imprégné d'huile, comportant les étapes consistant à (i) introduire un matériau imprégné d'huile dans une zone d'extraction, (ii) introduire un solvant normalement gazeux dans ladite zone d'extraction, dans des conditions de pression et de température qui assurent une liquéfaction du solvant normalement gazeux, avec pour résultat l'extraction d'au moins une partie de ladite huile, (iii) transférer le mélange ainsi obtenu d'huile extraite et de solvant dans une zone de séparation dans laquelle le solvant est séparé de l'huile extraite, (iv) recueillir l'huile extraite et (v) recueillir à l'état gazeux le solvant normalement gazeux pour le recycler vers ladite zone d'extraction ;
caractérisé en ce que (a) ledit procédé d'extraction d'huile est un procédé dans lequel les étapes (i) à (iii) sont exécutées successivement, (b) le matériau imprégné d'huile introduit forme un lit de ce matériau dans ladite zone d'extraction, (c) l'air est évacué de ladite zone d'extraction avant l'étape (ii) et (d) ledit mélange d'huile extraite et de solvant est transféré dans la zone de séparation au cours de l'étape (iii) dans des conditions qui maintiennent le solvant à l'état liquide, par introduction dans ladite zone d'extraction d'un gaz qui, à une température donnée, se liquéfie à une pression plus élevée que le solvant.

2. Procédé selon la revendication 1, dans lequel ledit matériau imprégné d'huile est un produit alimentaire cuit.

3. Procédé selon la revendication 1 ou 2, dans lequel le solvant normalement gazeux est choisi parmi le propane, le butane et des mélanges de ceux-ci.

4. Procédé selon la revendication 1, 2 ou 3, dans lequel l'évacuation de l'air hors de ladite zone d'extraction avant l'étape (ii) est effectuée en introduisant dans ladite zone d'extraction un gaz dont les caractéristiques de vaporisation diffèrent de celles du solvant, pour déplacer hors de ladite zone d'extraction ledit solvant à l'état liquide et ladite huile extraite, tout en maintenant lesdites conditions de température et de pression dans ladite zone d'extraction.

5. Procédé selon la revendication 4, dans lequel le gaz dont les caractéristiques de vaporisation diffèrent de celles du solvant est un gaz inerte.

6. Procédé selon la revendication 5, dans lequel le solvant normalement gazeux est le propane, et le gaz inerte est l'azote ou le dioxyde de carbone.

7. Procédé selon l'une quelconque des revendications précédentes, dans lequel le matériau imprégné d'huile est choisi parmi les graines de soja, les graines de coton, les graines de lin, le son de riz, le son de blé, la farine de maïs et le coco.

8. Procédé selon l'une quelconque des revendications précédentes, dans lequel le solvant normalement gazeux est périodiquement sollicité par des fluctuations d'au moins 103 KPa (0,25 psig) de la pression dans la zone d'extraction.

9. Procédé selon l'une quelconque des revendications précédentes, dans lequel on utilise un co-solvant, lequel co-solvant est choisi parmi les alcools en C₂ à C₆.

10. Procédé selon la revendication 2 ou l'une quelconque des revendications 3 à 9 dans la mesure où elle dépend de la revendication 2, dans lequel l'aliment cuit est un aliment frit.

11. Procédé selon la revendication 9, dans lequel l'aliment frit est constitué de pommes chips ou de pommes de terre frites.

12. Procédé selon la revendication 2, dans lequel l'aliment cuit est un aliment à base de viande.

13. Procédé selon la revendication 1, dans lequel l'évacuation de l'air de la zone d'extraction est effectuée par l'application d'une dépression.

14. Procédé selon l'une quelconque des revendications précédentes, dans lequel une dépression est appliquée dans la zone de séparation après que le solvant a été séparé de l'huile extraite.
